# EUROPÄISCHE PATENTSCHRIFT

(11) **EP 1 361 230 B1**
(45) Veröffentlichungstag und Bekanntmachung des Hinweises auf die Patenterteilung: **23.08.2006**
(21) Anmeldenummer: 03009313.2
(22) Anmeldetag: 24.04.2003
(51) Int. Cl.: C08B 11/00, C08B 5/02, C08B 11/20, C08B 31/08

(54) **Kontinuierliches Verfahren zur Herstellung und/oder Aufarbeitung von Polysaccharidderivaten**
Continuous process for making and /or treating polysaccharide derivatives
Procédé en continu pour la préparation et/ou le traitement des dérivés de polysaccharides

(30) Priorität: 07.05.2002 DE 10220270
(43) Veröffentlichungstag der Anmeldung: 12.11.2003
(73) Patentinhaber: Wolff Cellulosics GmbH & Co.KG, 29656 Walsrode (DE)
(72) Erfinder: Eckhardt, Volker, Dr., 29664 Walsrode (DE); Lohrie, Martin, Dr., 29664 Walsrode (DE); Schriewer, Bernd, Dr., 29664 Walsrode (DE); Tanneberger, Holger, 29683 Bad Fallingbostel (DE)
(74) Vertreter: Lütjens, Henning

(56) Entgegenhaltungen:
- US-A- 2 400 287
- US-A- 4 184 891

## Beschreibung

Die Erfindung betrifft ein Verfahren zur Herstellung und/oder Aufarbeitung von Polysaccharidderivaten, wie sie z.B. bei Celluloseethern und Celluloseestern bekanntermaßen durch chemische Umsetzung von gemahlener nahezu pulvriger oder kurzfaseriger Cellulose mit überwiegend flüssigen Reaktionspartnern in mehr oder minder feststoffreichen Suspensionen erzeugt werden, als auch die danach in Folgeprozess-Schritten an sich bekannte Weiterbehandlung bzw. Aufarbeitung der Feststoffe mit weiteren flüssigen Medien um das jeweilige Derivat zu waschen oder einzustellen, bevor durch Trocknung, Mahlung und häufig auch spezielle Aufarbeitung die endgültige Auslieferungsform vorliegt.

Die bekannten vielstufigen Verfahren zur Erzeugung und Aufarbeitung von Celluloseethern sind auch in R. DÖNGES, "Entwicklungen in der Herstellung und Anwendung von Cellulosethern", "DAS PAPIER", 12/1997, S.653-660 umfassend beschrieben worden. Danach erfordern sowohl die Durchführung der alkalischen Aktivierung der Cellulose sowie deren jeweilige Veretherungen selbst, als auch die nachfolgenden Aufarbeitungs- bzw. Reinigungsprozeduren der entstandenen Celluloseether zur Entfernung von Salzen, organischen Nebenstoffen und die Regeneration von Suspendiermitteln eine Vielzahl großer, zumeist druckfester Behälter mit mechanischen Rühr- u. Mischeinrichtungen, spezielle Wärmeübertrager, div. Förder- Trenn- bzw. Trocknungs- und Zerkleinerungsaggregate sowie umfangreiche Mess- und Regeltechnik. Die bekannten Verfahren sind zeit- und apparateaufwendig und haben hohe Stoff- und Energieverbräuche mit entsprechendem Anfall belasteter flüssiger Abprodukte verbunden mit spürbaren Wertstoffverlusten.

In vergleichbarer Weise lassen sich auch die bekannten Verfahren zur Herstellung von Celluloseestern charakterisieren. So ist beispielsweise die Erzeugung und Aufarbeitung von Cellulosenitrat (üblicherweise als Nitrocellulose bezeichnet) in zahlreichen Schriften wie z.B. DE-AS 1 771 006, US PS 4 401 809, US PS 1 818 733, US PS 1 911 203, DE OS 2 051 210 beschrieben worden. Demnach ist die Verwendung von großvolumigen Rührbehältern, Rührautoklaven, Zentrifugen und diversen weiteren kapitalintensiven Maschinen und Apparaten sowohl in der Cellulosenitrierung, insbesondere aber zum Zweck der Entsäuerung der Nitrocellulose und vor allem zur Einstellung von Produktspezifikationen wie z. B. Lösungsviskosität und chemische Stabilität noch immer Stand der Technik und kennzeichnend für die bekannten Produktionsverfahren.

Der bis heute in den meisten Fabrikationsstufen der bekannten Verfahren zur Erzeugung und/oder Aufarbeitung von Polysaccharidderivaten noch vorherrschende diskontinuierliche Betrieb mit seiner erheblichen Komplexität und seinem Personalbedarf verursacht naturgemäß Streuungen der Prozess- und Qualitätsparameter, wodurch anschließende Kompensationsmaßnahmen (wie z.B. aufwendige Nachvermischungen einzelner Chargen in entsprechend großen Mischapparaten) zur Nacheinstellung der gewünschten Produktspezifikationen die Regel sind.

Der vorliegenden Erfindung lag die Aufgabe zurunde, für die an sich bekannte Herstellung und/oder Aufarbeitung von Polysaccharidderivaten, wie z.B. Cellulosederivate oder Stärkederivate ein durchgängig kontinuierliches Verfahren zur Verfügung zu stellen.

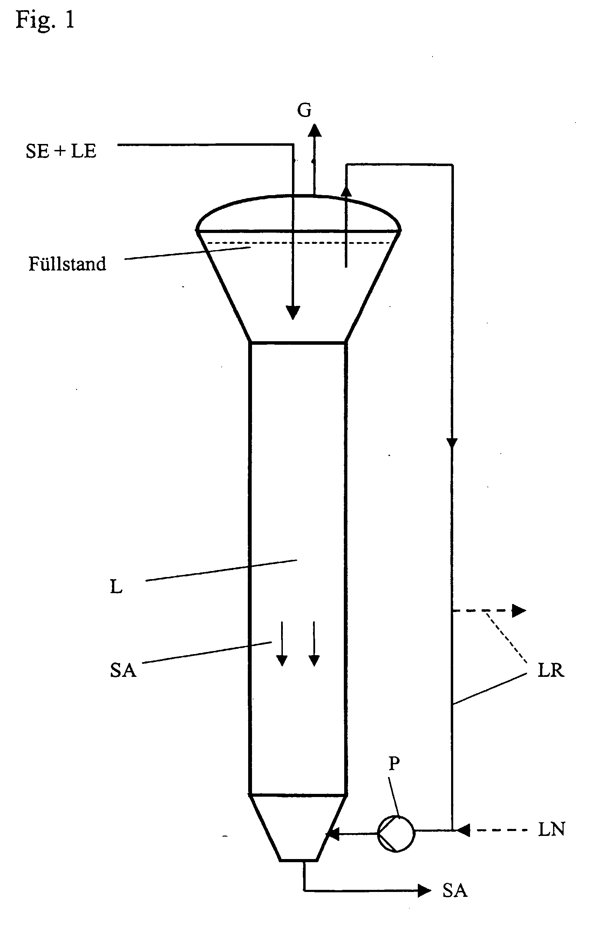

Erfindungsgemäß wird die Aufgabe gelöst, in dem entsprechend Fig. 1 ein auf die vom jeweiligen Prozeß vorgegebene Solltemperatur von bis zu 185°C vortemperierter und vorzugsweise pumpfähiger Suspensionsstrom aus Feststoff **SE** und betreffender Flüssigphase **LE** kontinuierlich in den Kopfbereich einer gegebenenfalls unter bis zu 6*10⁶ Pa Druck stehenden, mit gleicher oder prozeßbedingt anderer Flüssigphase **L** von vorzugsweise gleicher Solltemperatur angefüllten Kolonne geregelt eingeleitet wird, der sich dort infolge einsetzender Strömungsverzögerung und des gegebenen Dichteunterschiedes zwischen Feststoff und Flüssigphase stetig separiert. Daraufhin sedimentiert der als spezifisch schwerer gegenüber der Flüssigphase vorausgesetzte Feststoff **SE** mit überraschend gleichmäßiger Sinkgeschwindigkeit frei durch das Flüssigphasebad **L** zum Kolonnensumpf und unterliegt auf dem Weg dorthin bei der Umwandlung zum Feststoff **SA** den jeweils eingestellten Reaktions- bzw. Konditionierungsbedingungen auf besonders gleichmäßige Weise, insbesondere die Temperatur und Verweilzeit betreffend. Aus dem Sumpf der Kolonne wird der dort einsedimentierende chemisch umgesetzte und/oder spezifikationsgerecht konditionierte Feststoff **SA** wieder vollständig als vorzugsweise pumpfähiger Suspensionsstrom kontinuierlich unter Beibehaltung eines konstanten Kolonnenfüllstandes ausgeschleust. Dies geschieht prozessabhängig wahlweise, indem gemäß Fig. 1 der im Kolonnenkopfbereich vom Suspensionszustrom separierte nahezu geklärte Flüssigphasenstrom **LR** von dort entweder anteilig, vollständig oder vermehrt gegenüber dem Betrag des Eintrittsstromes an Flüssigphase **LE** geregelt abgezogen und im Kolonnensumpf dem einsedimendierenden Feststoff **SA** kontinuierlich mittels einer Pumpe **P** wieder beigegeben oder dort durch einen anderen Flüssigphasenstrom **LN** ersetzt wird. Aus dem Flüssigphasebad **L** im Kolonnenraum aufsteigende etwaige freigesetzte Gase **G** werden im Gasraum des Kolonnenkopfes gesammelt und dort getrennt vom genannten Flüssigphasenstrom **LR** abgeleitet.

Gegenstand der Erfindung ist daher ein Verfahren zur kontinuierlichen Herstellung und/oder Aufarbeitung von Polysaccharidderivaten durch Reaktion und/oder Konditionierung in einer Suspension mit flüssigen Reaktionspartnern, wobei gemäß Fig. 1.
a) ein auf eine jeweils prozeßbedingt vorgegebene Temperatur von gegebenenfalls bis zu 185°C vortemperierter vorzugsweise pumpfähiger Suspensionsstrom aus Feststoff **SE** und Flüssigphase **LE** kontinuierlich in den Kopfbereich einer gegebenenfalls unter einem Druckpolster von bis zu 6*10⁶ Pa stehenden Kolonne, die bis auf einen Gasraum im Kolonnenkopf mit der gleichen oder einer prozeßbedingt anderen Flüssigphase **L** mit vorzugsweise gleicher Temperatur nahezu gefüllt ist, eingeleitet wird, danach
b) der Feststoff **SE** durch Einwirkung der Schwerkraft durch die Flüssigphase **L** zum Kolonnensumpf frei sedimentiert, wobei der Feststoff **SE** durch Reaktion und/oder Konditionierung mit der Flüssigphase **L** in den Feststoff **SA** übergeht und
c) aus der Kolonne gegebenenfalls aufsteigende Gase **G** über den Kolonnenkopf abgeführt werden sowie
d) der Feststoff **SA** als Suspensionsstrom am Kolonnensumpf kontinuierlich durch Zugabe von zuvor am Kolonnenkopf bei konstant gehaltenem Kolonnenfüllstand entnommener, in einer separaten Verbindung geförderter Flüssigphase **LR** und/oder durch neu von außen in den Kolonnensumpf zudosierter Flüssigphase **LN** wieder kontinuierlich ausgetragen wird.

Durch Reaktion bzw. Konditionierung wandelt sich dabei der Feststoff **SE** auf dem Weg durch das Flüssigkeitsbad **L** in den Feststoff **SA** um. Dies kann z. B. mit vorzugsweise kurzfaserig aufgemahlener Cellulose bei deren Aktivierung in wässriger Natronlauge vor ihrer Veretherung insbesondere zu Methyl- (MC) oder Carboxymethylcellulose (CMC) kontinuierlich auf die erfindungsgemäße Weise erfolgen. Für die anschließende Veretherung der alkalisch so aktivierten Cellulose mit Monochloressigsäure zu CMC arbeitet man ebenfalls mit einer Suspension der Cellulose in bekannten inerten Flüssigphasen wie z. B. Isopropanol mit dem erfindungsgemäßen Verfahren genau so vorteilhaft, wie bei der üblicherweise nachfolgenden Reinigung der CMC insbesondere von vorhandenen Salzen. Gleiches gilt für die Herstellung von MC aus alkalisch aktivierter Cellulose durch Suspendieren in Methylchlorid unter an sich bekannten Reaktionsbedingungen. Der Feststoffgehalt in den eingesetzten Suspensionen soll vorzugsweise deren freies Fließen bzw. die sogenannte Pumpfähigkeit noch gewährleisten und liegt deshalb erfahrungsgemäß unter 12 Gew.%. Nur wenn anstelle von kurzfaserigem Feststoff bereits feinpulveriger vorliegt und/oder der Prozeß infolge nur mäßiger Temperaturen drucklos geführt werden kann, sind die zu- und abzuführenden Suspensionen auch mit Feststoffkonzentrationen von weit über 50 Gew.% noch mittels der dann gebräuchlichen Förderaggregate an Kopf und Sumpf der Kolonne erfindungsgemäß vorteilhaft einsetzbar.

Unter Konditionierung eines Polysaccharidderivates wird dabei die Aufarbeitung nach der Herstellung wie z.B. die Entfernung von Begleit- und Nebenprodukten durch ein selektives Waschmedium als auch der thermische Abbau der Polysaccharidderivat-Makromoleküle zur gezielten Einstellung einer an die entsprechende Anwendung angepassten Viskosität verstanden. Die Druckkochung von Nitrocellulose ist z. B. eine derartige thermische Konditionierung.

Eine gezielte Einflussnahme auf die Zusammensetzung und Eigenschaften der Feststoffsuspension beim Austritt aus dem Kolonnensumpf erfolgt erfindungsgemäß auch dann, wenn gemäß Fig. 1 unter konstantem Kolonnenfüllstand beim Ersatz des ausgeschleusten Stromes **LR** durch einen neu eintretenden größeren Strom **LN** ein geregelter Gegenstrom entgegen dem sedimentierenden Feststoff **SA** in der Kolonne erzeugt wird, der neben einer möglichen besseren Temperierung besonders die konzentrations- und diffusionsabhängigen Stoffübergangsvorgänge durch entsprechenden Triebkraftaufbau zwischen sedimentierendem Feststoff **SA** und vorzugsweise frischer/anderer Flüssigphase **L** in der Kolonne begünstigt und somit das erfindungsgemäße Verfahren noch vorteilhafter gestaltet.

Das erfindungsgemäße Verfahren zeichnet sich auch dadurch aus, dass der kontinuierliche freie Sedimentationsvorgang des Feststoffes **SA** durch das Flüssigphasebad **L** in der Kolonne im technisch interessanten Bereich weitreichend unabhängig vom Feststoff- bzw. Suspensionsdurchsatz **(SE+LE)** überraschend gleichmäßig und mit nahezu gleichverteilter, in ihrer Größe aber maßgeblich vom jeweiligen System **SE/SA** und **L** abhängiger Sinkgeschwindigkeit verläuft. Damit und durch die erfindungsgemäße wahlweise Abtrennung eines nahezu geklärten Flüssigphasenstromes **LR** aus dem Eintrittsstrom **LE** am Kolonnenkopf sind kontinuierlicher Durchsatz und Verweilzeit speziell des Feststoffes **SA** im Gegensatz zu bekannten kontinuierlichen Strömungsreaktoren (wie z. B. Rührkesselkaskade oder Strömungsrohr ) praktisch voneinander entkoppelt.

Zur kontinuierlichen Herstellung und/oder Konditionierung, insbesondere zur Herstellung und anschließenden Konditionierung, ist das erfindungsgemäße Verfahren im jeweils betreffenden Prozess-Schritt auch in mehreren Einzelkolonnen, die getrennt aufgestellt und vorzugsweise in Reihenschaltung verbunden sind, einzusetzen. Hierbei wird der aus dem Sumpf der früheren Kolonne ausgeschleuste Suspensionsstrom in den Kopf der späteren Kolonne eingeleitet.

Mit dem erfindungsgemäßen kontinuierlichen Verfahren erfolgen die Erzeugung und/oder Aufarbeitung von Polysaccharidderivaten sowie vergleichbarer Feststoffe auf besonders raum- sowie material- und energiesparende Weise und wahlweise nach dem Gleich- oder Gegenstromprinzip der Phasenführung. Die Erfindung gestattet eine vergleichsweise große Variationsbreite der Prozeßparameter bei einer stabilen kontinuierlichen Betriebsführung mit vergleichsweise unkomplizierten Apparaten in Verbindung mit einem sehr hohen Automatisierungsgrad.

Das erfindungsgemäße Verfahren arbeitet gegenüber den bekannten Verfahren durch seinen einfachen Apparate- und sparsamen Energiebedarf, die hohe Flüssigphasenausnutzung durch Gleich- oder Gegenstrom- sowie Kreislaufführung und den verminderten Anfall belasteter Flüssigphasen nicht nur deutlich kostengünstiger, sondern insbesondere auch sicherer, weil bezogen auf gleiche Anlagenkapazitäten allein der Feststoffinhalt im Reaktionsraum einer Kolonne nur Anteile eines üblichen Batchansatzes in den heute bekannten Fabrikationsanlagen beträgt.

Bevorzugt wird das erfindungsgemäße Verfahren zur Herstellung und/oder Aufarbeitung von Polysaccharidderivaten, die Cellulosederivate sind, eingesetzt. Besonders bevorzugt sind dabei Carboxymethylcellulose, Nitrocellulose oder Methylhydroxyalkylcellulose. In einer weiteren bevorzugten Form wird das erfindungsgemäße Verfahren für Polysaccharidderivate die Stärkederivate sind, insbesondere für Carboxymethylstärke, eingesetzt.

Vorteihaft wird das erfindungsgemäße Verfahren auch zur Konditionierung von Cellulosederivaten, insbesondere zur Druckkochung von Nitrocellulose eingesetzt. Bei der Druckkochung wird bekannterweise Nitrocellulose unter einem Druck von bis zu 5*10⁵ Pa in heißem Wasser mit einer Temperatur von bis zu 150 °C erhitzt. Durch thermischen Abbau der Nitrocellulose-Moleküle können so bestimmte Viskositäten eingestellt werden. Weil das erfindungsgemäße Verfahren hier höhere Temperaturen zuläßt, vollzieht sich der Druckkochprozeß sehr viel schneller als bei den herkömmlichen Verfahren.

### Figur 1

In Figur 1 bedeuten:
- SE:: Feststoff suspendiert, Eintrittszustand
- LE:: Flüssigphase als Suspendiermittel für SE
- LR:: abgezogene Flüssigphase aus Kolonnenkopf, vom SE separiert
- L :: konstanter Flüssigphaseninhalt in der Kolonne
- LN:: Flüssigphase neu, ggf. Ersatz für LR
- SA:: Feststoff suspendiert, Austrittszustand
- G :: ggf. abzuziehende Gase/Dämpfe
- P :: Förderpumpe zur Einschleusung LR und/oder LN

### Ausführungsbeispiele

Mit zwei Ausführungsbeispielen soll das erfindungsgemäße Verfahren näher erläutert werden.

### Beispiel 1

Ein aus der Veretherungsstufe kommender eingedickter Suspensionsstrom von 440 kg/h mit ca. 70 Gew.% Carboxymethylcellulose **SE** und restlichem kochsalzhaltigem Isopropanol-Wasser-Gemisch **LE** (sogenannte CMC-Dickslurry) wird mit einer Temperatur von etwa 50 °C in den Kopf einer drucklosen, mit sogenanntem Reinigungsmittel **L**, einem Gemisch aus Isopropanol, Methanol und wenig Wasser, von gleichfalls 50 °C nahezu vollständig gefüllten Kolonne kontinuierlich geregelt eingetragen. Die CMC sedimentiert gleichmäßig und gleichverteilt als Feststoff **SA** durch das Reinigungsmittelbad **L** zum Kolonnensumpf. Dort wird ein frischer Reinigungsmittelstrom **LN** in einer Menge von 0,65 m³/h und mit einer Temperatur von 50 °C stetig geregelt mittels der Pumpe **P** eingeleitet, um sowohl die einsedimentierende CMC wieder als konzentrierte Dickslurry mit etwa 53 Gew.% Feststoff stetig aus dem Kolonnensumpf in einem Strom von ca. 575 kg/h bei konstant gehaltenem Kolonnenfüllstand austragen zu können, als auch einen Gegenstrom an Reinigungsmittel zum Kolonnenkopf zu erzeugen. Dieser nimmt Salze und Begleitstoffe aus der entgegensinkenden CMC weitgehend auf, bevor er vermehrt um den Volumenstrom **LE** des eintretenden Suspendiermittels als beladenes Reinigungsmittel **LR** am Kopf der Kolonne in einer Menge ca. 0,48 m³/h gleichmäßig ausgeschleust wird.

### Beispiel 2

Bei der Herstellung von Nitrocellulose (NC) folgt auf die bekannten Verfahrensschritte Cellulosenitrierung und Nitriersäureabtrennung sowie Vorstabilisierung die sogenannte Druckkochung der NC in Heißwasser, um sowohl Begleitstoffe und Nebenprodukte abzuspalten, insbesondere aber um durch gezielten thermischen Abbau der NC-Makromoleküle die speziell von der Lackindustrie geforderten Viskositäten der später dort erzeugten NC-Lösungen zu erreichen.
Ein für die Druckkochung bestimmter Suspensionsstrom von 2,5 m³/h mit ca. 8 Gew% NC **SE** und dem Rest Wasser **LE** wird auf 170 °C aufgeheizt, bevor er in den Kopf einer mit Heißwasser von 170 °C angefüllten und unter einem Druckpolster von 9*10⁵ Pa stehenden Kolonne kontinuierlich eintritt. Die NC als spezifisch schwererer Feststoff beginnt frei durch das Heißwasserbad **L** im zylindrischen Kolonnenkörper zu sedimentieren und wird gleichmäßig während ihrer Sinkzeit bis zum Kolonnensumpf in Abhängigkeit von der gewählten Temperatur thermisch bestimmungsgemäß abgebaut. Abspaltprodukte gehen in das Wasserbad **L** über, aufsteigende etwaige Gasbläschen G sammeln sich im Gasraum des Kolonnenkopfes und werden von dort abgeleitet. Ein Teilstrom **LR** von 1,9 m³/h nahezu geklärten Heißwassers wird oberhalb des Suspensionseinlaufes aus dem Kolonnenkopf mittels einer Pumpe **P** geregelt abgezogen und in den Kolonnensumpf gefördert, um die dort einsedimentierende bestimmungsgemäß eingestellte NC **SA** wieder problemlos als pumpfähigen Suspensionsstrom in Höhe von 2,5 m³/h kontinuierlich austragen zu können. Der vom Eintrittswasserstrom **LE** verbleibende Reststrom, der wegen des geregelt konstant gehaltenen Füllstandes in der Kolonne ebenfalls konstant ist, strömt gleichsinnig mit der sedimentierenden NC zum Kolonnensumpf und sorgt auf dem Weg dorthin für den Wasseraustausch im Heißwasservolumen **L** und die Temperaturhaltung in der Kolonne.

## Patentansprüche

1. Verfahren zur kontinuierlichen Herstellung und/oder Aufarbeitung von Polysaccharidderivaten durch Reaktion und/oder Konditionierung in einer Suspension mit flüssigen Reaktionspartnem, **dadurch gekennzeichnet, dass** gemäß Fig. 1
a) ein gegebenenfalls bis zu 185 °C vortemperierter Suspensionsstrom aus Feststoff **SE** und Flüssigphase **LE** kontinuierlich in den Kopfbereich einer gegebenenfalls unter einem Druckpolster von bis zu 6*10⁶ Pa stehenden Kolonne, die mit einer gleichtemperierten gleichen oder anderen Flüssigphase **L** weitgehend gefüllt ist, eingeleitet wird, danach
b) der Feststoff **SE** durch Einwirkung der Schwerkraft durch die Flüssigphase **L** frei zum Kolonnensumpf sedimentiert, wobei der Feststoff **SE** durch Reaktion und/oder Konditionierung mit der Flüssigphase **L** in den Feststoff SA übergeht und
c) aus der Kolonne gegebenenfalls aufsteigende Gase **G** über den Kolonnenkopf abgeführt werden sowie
d) der Feststoff **SA** am Kolonnensumpf durch Zugabe von zuvor am Kolonnenkopf entnommener und in einer separaten Verbindung zum Kolonnensumpf geförderter Flüssigphase **LR** und/oder durch neu von außen in den Kolonnensumpf zudosierter Flüssigphase **LN** unter konstant gehaltenem Kolonnenfüllstand wieder kontinuierlich als Suspensionsstrom ausgeschleust wird.

2. Verfahren nach Anspruch 1, **dadurch gekennzeichnet, dass** in Schritt d) durch die Wahl der jeweiligen Volumenstromverhältnisse der Flüssigphasenströme **LR** und/oder **LN** zum Eintrittsstrom **LE** ein Gleichstrom an **LE** oder ein Gegenstrom an **LR** und/oder **LN** in gewünschter Größe zum sedimentierenden Feststoff **SA** eingestellt wird.

3. Verfahren nach einem der Ansprüche 1 bis 2, **dadurch gekennzeichnet, dass** zur Durchführung des Verfahrens mehrere Kolonnen hintereinander geschaltet werden, wobei der aus dem Sumpf der früheren Kolonne ausgeschleuste Suspensionsstrom in den Kopf der späteren Kolonne eingeleitet wird.

4. Verfahren nach einem der Ansprüche 1 bis 3, **dadurch gekennzeichnet, dass** das Polysaccharidderivat ein Cellulosederivat ist.

5. Verfahren nach einem der Ansprüche 1 bis 4, **dadurch gekennzeichnet, dass** das Polysaccharidderivat ein Cellulosederivat aus der Gruppe Nitrocellulose, Carboxymethylcellulose, Methylhydroxycellulose ist.

6. Verfahren nach einem der Ansprüche 1 bis 3, **dadurch gekennzeichnet, dass** das Polysaccharidderivat ein Stärkederivat ist.

7. Verfahren nach einem der Ansprüche 1 bis 3, **dadurch gekennzeichnet, dass** das Polysaccharidderivat Carboxymethylstärke ist.

8. Verfahren nach einem der Ansprüche 1 bis 3, **dadurch gekennzeichnet, dass** das Polysaccharidderivat Nitrocellulose ist und das Verfahren zur Aufarbeitung von Nitrocellulose als Druckkochverfahren durchgeführt wird.

## Claims

1. Process for the continuous preparation and/or workup of polysaccharide derivatives by reaction and/or conditioning in a suspension with liquid reaction partners, **characterized in that**, in accordance with Fig.1,
a) a suspension stream, if appropriate preheated to 185°C, of solids **SE** and liquid phase **LE** is continuously introduced into the top region of a column which is, if appropriate, under a pressure buffer of up to 6 × 10⁶ Pa and is substantially filled with an identical or different liquid phase **L** at the same temperature, then
b) the solids **SE** sediments freely due to the action of gravity through the liquid phase **L** to the column bottom, the solids **SE** converting to the solids **SA** by reaction and/or conditioning with the liquid phase **L** and
c) possibly ascending gases **G** are discharged from the column via the column top and
d) the solids **SA** are again continuously discharged as a suspension stream at the column bottom at a constant column filling level by adding liquid phase **LR** previously taken off at the column top and transported in a separate connection to the column bottom and/or by liquid phase **LN** newly added from outside to the column bottom.

2. Process according to Claim 1, **characterized in that**, in step d), by the choice of the respective volumetric flow ratios of the liquid-phase streams **LR** and/or **LN** to the inlet stream **LE,** a cocurrent flow of **LE** or a counter flow of **LR** and/or **LN** in the desired magnitude to the sedimenting solid **SA** is set.

3. Process according to one of Claims 1 to 2, **characterized in that**, to carry out the process, a plurality of columns are connected in series, in which case the suspension stream ejected from the bottom of the previous column is introduced into the top at the later column.

4. Process according to one of Claims 1 to 3, **characterized in that** the polysaccharide derivative is a cellulose derivative.

5. Process according to one of Claims 1 to 4, **characterized in that** the polysaccharide derivative is a cellulose derivative selected from the group consisting of nitrocellulose, carboxymethylcellulose, methylhydroxycellulose.

6. Process according to one of Claims 1 to 3, **characterized in that** the polysaccharide derivative is a starch derivative.

7. Process according to one of Claims 1 to 3, **characterized in that** the polysaccharide derivative is carboxymethyl starch.

8. Process according to one of Claims 1 to 3, **characterized in that** the polysaccharide derivative is nitrocellulose and the process for working up nitrocellulose is carried out as a pressure-cooking process.

## Revendications

1. Procédé pour la préparation et/ou le traitement continu de dérivés de polysaccharide par réaction et/ou conditionnement dans une suspension avec des partenaires réactionnels liquides, **caractérisé en ce que** selon la figure 1
a) on introduit un courant de suspension éventuellement pré-tempéré jusqu'à 185°C de matière solide **SE** et de phase liquide **LE** en continu dans le domaine de tête d'une colonne se trouvant éventuellement sous une couverture de pression allant jusqu'à 6.10⁶ Pa, laquelle est largement remplie d'une phase liquide L identique ou différente tempérée de manière identique, après cela
b) la matière solide **SE** sédimente librement sous l'action de la pesanteur par l'intermédiaire de la phase liquide **L** en queue de colonne, la matière solide **SE** étant transférée par réaction et/ou conditionnement avec la phase liquide **L** dans la matière solide SA et
c) des gaz **G** s'élevant éventuellement de la colonne sont évacués en tête de colonne et
d) la matière solide **SA** en queue de colonne est à nouveau évacuée en continu comme courant de suspension par addition de phase liquide **LR** préalablement prélevée en tête de colonne et transportée en queue de colonne dans un raccordement séparé et/ou par une phase liquide **LN** à nouveau ajoutée à partir de l'extérieur en queue de colonne avec un niveau de remplissage de colonne maintenu constant.

2. Procédé selon la revendication 1, **caractérisé en ce que** l'on ajuste dans l'étape d) un co-courant en **LE** ou un contre-courant en **LR** et/ou **LN** à la grandeur souhaitée par rapport à la matière solide de sédimentation **SA** en choisissant les rapports de courants volumiques correspondants des courants de phase liquide **LR** et/ou **LN** par rapport au courant d'entrée **LE.**

3. Procédé selon l'une quelconque des revendications 1 à 2, **caractérisé en ce que** l'on raccorde plusieurs colonnes les unes après les autres pour réaliser le procédé, le courant de suspension évacué en queue de la première colonne étant introduit en tête de la colonne suivante.

4. Procédé selon l'une quelconque des revendications 1 à 3, **caractérisé en ce que** le dérivé de polysaccharide est un dérivé de cellulose.

5. Procédé selon l'une quelconque des revendications 1 à 4, **caractérisé en ce que** le dérivé de polysaccharide est un dérivé de cellulose choisi parmi la nitrocellulose, la carboxyméthylcellulose, la méthylhydroxycellulose.

6. Procédé selon l'une quelconque des revendications 1 à 3, **caractérisé en ce que** le dérivé de polysaccharide est un dérivé d'amidon.

7. Procédé selon l'une quelconque des revendications 1 à 3, **caractérisé en ce que** le dérivé de polysaccharide est un amidon de carboxyméthyle.

8. Procédé selon l'une quelconque des revendications 1 à 3, **caractérisé en ce que** le dérivé de polysaccharide est la nitrocellulose et le procédé est réalisé pour le traitement de nitrocellulose en tant que procédé d'ébullition sous pression.
